# EUROPEAN PATENT APPLICATION

(11) **EP 1 564 619 A1**
(43) Date of publication of application: **17.08.2005**
(21) Application number: 04293027.1
(22) Date of filing: 17.12.2004
(51) Int. Cl.: G06F 1/00

(54) **Biometric access control using a mobile telephone terminal**

(30) Priority: 17.12.2003 FR 0314790
(71) Applicant: Bouygues Telecom, 92100 Boulogne Billancourt (FR)
(72) Inventor: Poinsenet, Ian, 78500 Sartrouville (FR); Pierson, Jacky, 78150 Le Chesnay (FR)
(74) Representative: Texier, Christian

(57) **Abstract**

The invention relates to a method for controlling a user's access to a resource, wherein the access to said resource is protected by an access base (20,200), and the user has a mobile telephone terminal (10,100) equipped with a module for acquiring at least one biometric data of the user, which method includes an access request step (1a,1b,100a,100b) in which the user indicates using its terminal that he wishes to have access to the resource, as well as an acquisition step (4,130) for acquiring at least one biometric data from the user on the terminal, search by a biometric comparison module for a match between said biometric data of the user and one or more user biometric references; and indication to the base of the result of said search by said server.

The invention also relates to an access control system and an access base comprising means for implementing the method according to the invention.

## Description

The field of the invention is the control of access to a resource regulated by an access base, in which control validation is performed using biometric information to ensure that a user wanting access to the resource is a legitimate holder of the access right.

The invention relates to the use of a mobile telephone terminal so that the user can provide at least one biometric data, and thus prove his identity to the protected resource access base.

The invention more specifically relates to an operation in which a first resource access request step is used to contact, in a second step, the mobile telephone terminal on which the user's biometric data is to be implemented.

To protect access to a protected resource, an access base is generally used so as to authorize or prevent access by a user to said resource, depending on the user's access rights.

"Access base" refers not only to the apparatus controlling access to the protected resource to which the user seeks access, and to which he must generally provide information on his identity, but also any infrastructure element supporting a portion of the access right control functions (remote database, connection to remote servers, etc.).

Generally, an access base can control :
- physical access to a site (building, computer room, control room, vault, etc.) ;
- access to a logic unit (computer, personal digital assistant, computer network, file, directory, computer peripheral, etc.) ;
- access to consumer goods (for example, a drink dispenser), wherein access is generally linked to the purchase or rental of the good ;
- access to an Internet site entrance page (for example, a Web, Wap or i-mode site).

An access base is discussed here in isolation, but it can be part of an assembly of bases managed by a single entity. Such an entity is, for example, a business managing access to one or more buildings with an access base at each of the building doors.

A protected resource access control system comprises an access right management function. This function generally corresponds to the management of a table matching a user's identity code with the access rights of said user which are controlled by the base.

These access rights can be binary (access authorized or rejected) or dependent on several factors (such as the time period during which access is authorized, for example).

Generally, biometric technique means any method for identifying or authenticating an individual on the basis of a characteristic of said individual, in particular a physical characteristic (fingerprint, iris, face, etc.) or a behavioral characteristic (signature, keystrokes on a computer keyboard, etc.).

These characteristics provide almost certain proof of an individual's identity since they constitute unique characteristics that distinguish one individual from another and can be associated with only one individual.

Therefore, it is theoretically impossible for a fraud to impersonate an honest user.

The integration of biometrics into a protected resource access control system thus appears to guarantee of increased security, in particular by significantly reducing exposure of the system to fraud.

Moreover, it should be noted that some biometric techniques also enable certain characteristic of a user, such as age or sex, for example, to be assessed.

Before any use of a biometric system, a preliminary enrollment phase is necessary, in which each user must provide a sample of the biometric characteristic, which will serve as the reference.

Biometrics essentially comprises three modes of use, namely identification, authentication or restricted identification.

In the first mode, the user is identified solely with biometrics, without any other information on the user, and therefore requires the acquired biometric data to be compared with all of those stored in a reference database indexing the references of all of the users. This is therefore a 1-to-N comparison.

In authentication, a non-biometric user identity code is provided, enabling the precise biometric reference of the person seeking access to be recovered in the reference database.

The biometric system is then used to verify that the person presenting the identity code is indeed its legitimate owner. This is therefore a 1-to-1 comparison.

In restricted identification, a non-biometric user identity code is provided so as to select not a single biometric reference from the reference database, but a small number of them.

Such a mode of use corresponds to a shared use of a single identity code among several individuals.

The implementation of a biometric technique can be seen as the realization of four basic functions, namely :
- the acquisition of the biometric data using a sensor suitable for the biometric characteristic examined. For example, a microphone is used for the voice, a camera for the face or iris, or a fingerprint sensor, etc. ;
- the calculation of biometric reference data during the enrollment phase ;
- the management of reference biometric data using a so-called reference database indexing the references of the users. This management includes, in particular, the insertion in the reference database of a new reference and the search for relevant data in the base (one for authentication, a larger number for restricted identification, the entire base for identification) ;
- the search for a match between the biometric reference data and an acquired biometric data item during access control (1-to-1 comparison for authentication, 1-to-N comparison for identification or restricted identification).

The basic biometric functions mentioned above must be implemented in a protected resource access control entity seeking to develop a biometric system for access control, for example, so as to take advantage of the higher level of security provided by biometrics.

Such an implementation requires that said entity in particular performs a preliminary enrollment phase, in which each of the users must provide a sample of the biometric characteristic, which serves as the reference.

This enrollment phase may be difficult to carry out depending on the biometric characteristic examined.

Moreover, when a user is faced with various independent biometric systems for access control, he must repeat this enrollment phase for each of the separate systems.

Therefore, there is a risk, in particular if biometric solutions for access control become commonplace for the general public, that the repeated enrollment phases may be disagreeable for the users.

Moreover, it should be noted that each biometric system may have a different biometric data selection policy depending on the type or quality of said data.

It is possible, for example, that a print of a different finger is requested for different systems using the fingerprint. Such a disparity may also be a source of confusion for the user, and even lead to the rejection of honest users due to improper use of the biometric system.

Finally, because the user is faced with a variety of techniques and different solutions for biometric access control, the use of such access control services may become tedious.

An aim of the invention is to propose a method and a biometric system controlling access to a protected resource that overcomes the limitations mentioned above.

More specifically, according to a specific aspect, an aim of the invention is to provide users with a single, simple means to identify or authenticate themselves biometrically at various protected resource access bases.

To this end, the invention proposes a method for controlling a user's access to a resource, in which access to said resource is protected by an access base, and the user has a mobile telephone terminal equipped with a module for acquisition of at least one biometric data item from the user, which method includes an access request step in which the user indicates, using its terminal, that he wishes to access the resource, as well as a step in which at least one biometric data of the user is acquired on the terminal,
said method being characterized in that :
- to indicate that he wishes to access the resource to which access is protected by the terminal, the user transmits an identifying code of the base to a server,
- and in that, following the step of requesting access to the resource, it comprises the steps of :

- transmission by the server of the access request to the access base identified by said identifying code that the telephone terminal has provided to the server ;
- call of the terminal to invite the user to provide the biometric data on its terminal ;
- search by a biometric comparison module for a match between said biometric data of the user and one or more user biometric references ;
- indication to the base of the result of said search by said server.

According to another aspect, the invention proposes a protected resource access control system comprising means for implementing the method according to the invention.

The invention also relates to an access base comprising means for implementing the method according to the invention.

Other aims, features and advantages of the invention will be described below, with reference to the following figures :
- figure 1 shows a system according to a first embodiment of the invention implementing a biometric authentication of the user ;
- figure 2 is a flow chart showing the main steps of the method according to the first embodiment of the invention ;
- figure 3 shows a system according to a second embodiment of the invention implementing a biometric identification of the user ;
- Figure 4 is a flow chart representing the main steps of the method according to the second embodiment of the invention.

An access control system is typically implemented by an entity so as to control access to a protected resource.

As seen previously, a protected resource access control system schematically comprises an access base where the user presents himself as well as a database for managing the access rights controlled by the base.

Said access right management database typically comprises a table matching user identity codes with the access rights of said users to the protected resource.

These rights can generally be binary (access authorized or rejected) or dependent on several factors (such as, for example, the time period during which access is authorized, the user's age, etc.).

When a user presents himself at an access base, said user transmits a request for access to the protected resource.

According to a first embodiment of the invention, the user also provides a non-biometric identifier to the base.

This identity code helps to query the database managing access rights and determines the access rights relative to said identity code.

This first embodiment of the invention proposes an access control system implementing, after this step of determining the access rights relative to an identity code provided by a user, a biometric authentication step in which the user is invited to biometrically prove that he is not impersonating another user. The access base hence invites the user to answer the question "are you really who you say you are?".

This first embodiment applies, for example, to the case in which the terminal is used by a single user.

This first embodiment can also apply to the case in which the terminal is used by a restricted group of users all having the same access rights (a single non-biometric identity code is thus shared and used by all of the members of the group). This is, for example, the case of a shared use of the terminal by several members of a family or a business.

This first embodiment can also apply to the case in which the terminal can be used by several users not having the same access rights, wherein a user of this terminal provides his or her own non-biometric identity code after requesting access to the resource.

A second embodiment of the invention proposes an access control system implementing, after the access request step, a biometric identification step in which the user is invited to "decline", biometrically speaking, his identity. The access base thus invites the user to answer the question "are you sure that I know you?

This second embodiment applies, for example, to the case in which the terminal may be used by several users not having the same access rights. Depending on the result of the biometric identification of a user of this terminal, a non-biometric identity code of the user can be deduced. This identity code is then sent to the access base, which queries the access rights management database and determines the access rights relative to said identity code.

In the context of the invention, the biometric functions are not supported by the access base.

The invention in fact proposes that the biometric authentication or identification of a user be carried out by a mobile telephone terminal belonging to the user.

More specifically, the mobile telephone apparatus supports the functions for acquiring the user's biometric data. The mobile telephone apparatus is thus equipped with a biometric data acquisition module.

Said module depends on the biometric characteristic to be acquired for comparison with one or more biometric references.

As non-limiting examples, said module can be a microphone when the characteristic examined is the user's voice print, a camera when the user's face or iris is to be studied, or a specific sensor for the user's fingerprint.

Of course, the invention is not limited to one specific biometric characteristic but extends to any physical or behavioral characteristic of an individual enabling his identity to be determined.

The invention also extends to an analysis of a combination of different biometric characteristics (for example, the simultaneous analysis of a user's voice prints and fingerprints).

In general, the invention proposes obtaining biometric authentication or identification by means of a mobile telephone terminal, by calling said terminal on which said authentication is being carried out, after a first step in which the user of the terminal requests access to the resource at the access base.

The invention proposes the use of a server, capable of communicating both with the access base and with the user terminal, and further comprising means suitable for indicating to the base the result of the biometric authentication or identification of the user.

The terminal integrates the function of acquiring the user's biometric data. The function of comparing said biometric data with one or more biometric user references (1-to-1 comparison or 1-to-N comparison) can be supported either by the terminal or by the server, or be distributed between the two (a first portion of the processing being carried out on the terminal, for example, the calculation of minutiae in the case of fingerprints, and the second portion carried out by the server, for example in the case of fingerprints, the comparison of the minutiae with the references).

When the comparison function is not entirely supported by the terminal, the latter sends said biometric data of the user to the server (optionally preprocessed if the comparison function is distributed between the terminal and the server). Of course, in this case, the server also comprises means for authenticating or identifying a user, once the latter has "entered" the biometric data on the terminal.

Said server can obviously be connected to a plurality of access bases, and in particular access bases implemented by separate access control entities.

In such a situation, the user recording his reference on the server only does so one time instead of having to perform a specific enrollment for each separate management entity of a biometric access control system.

In a particularly advantageous manner, said server may be a server managed by a mobile telephone operator, such as the user's operator, for example, as will be discussed below.

The biometric reference of a user can be stored on the user's terminal or in a reference management database located on said server.

The first embodiment of the invention, for which a biometric user authentication step is implemented, and after which said user is identified at the access base, is described below.

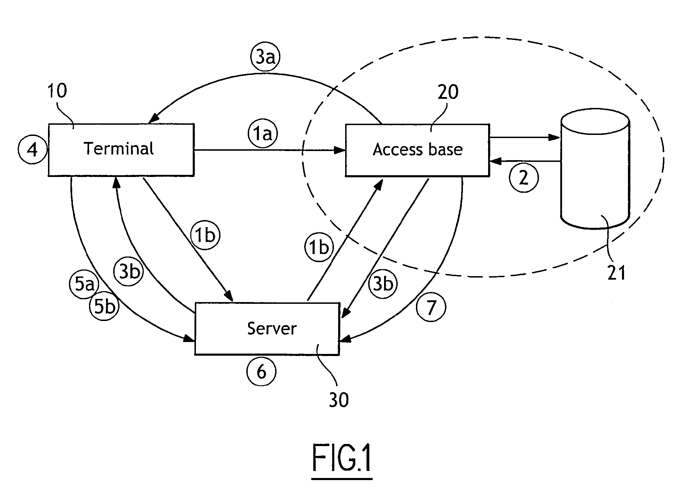

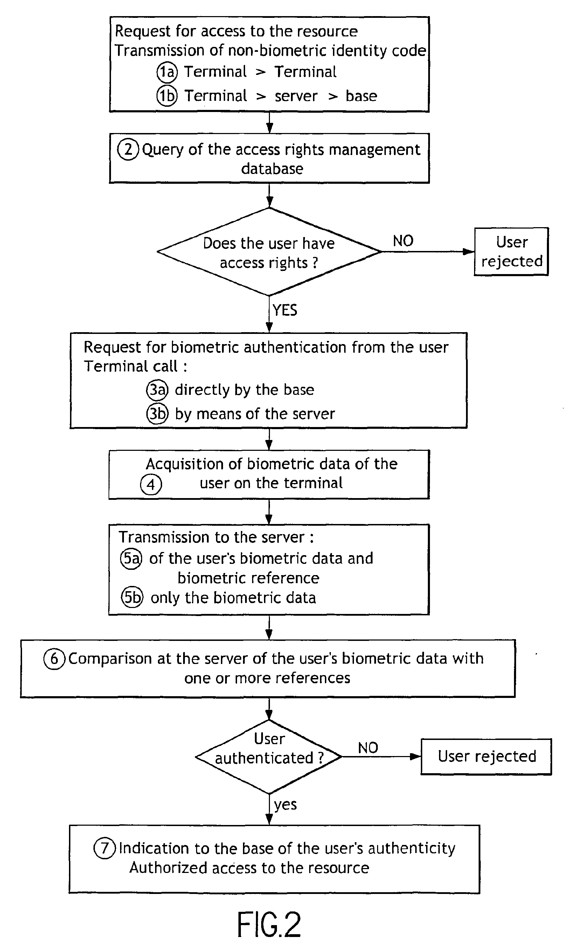

Figures 1 and 2 show this first embodiment of the invention in the case in which the comparison function is entirely or partially supported by the server.

In reference to figure 1, the system according to the first embodiment of the invention for controlling access to a protected resource includes a mobile telephone terminal 10 equipped with a biometric data acquisition module, an access base 20 with a database 21 for managing access rights and a server 30 integrating a biometric module suitable for searching for a match between a biometric data and one or more references.

The arrows and numeric references encircled in said figure 1 represent the main operations carried out during the control of access of a user with a terminal 10 to the resource protected by the access base 20.

Figure 2 is a flow chart representing the sequence of said operations, with the numeric references on this figure corresponding to those encircled in figure 1.

The main steps of the biometric authentication method according to the first embodiment of the invention are described below.

In a first identification step, the user sends, via the mobile telephone terminal 10, to the access base 20, a request for access to the resource as well as a non-biometric identity code.

As described previously, this non-biometric identity code can belong to the user alone or be common to a restricted group of users having the same access rights to the resource.

The exchanges between terminal 10 and base 20 can occur directly in this identification step. The arrow 1a of figure 1 illustrates such a direct exchange.

In this situation, the terminal 10 and the access base 20 are capable of communicating together. This communication can be performed in a non-limiting manner :
- by radio link used conventionally for mobile communications, by the GSM radiocommunication system or by SMS short messaging (in which cases the user dials a telephone number associated with the access base so as to make the request for access and provides his identity code) or by the GPRS radiocommunication system (in which case the user enters a URL Web address or an IP address associated with the access base),
- by an alternative radio link (for example, using Bluetooth wireless technology, or a Wi-Fi wireless local network),
- or by any other short-distance connection means (infrared, etc.).

The exchanges between terminal 10 and base 20 for the access request and transmission of the user's non-biometric identity code can preferably be carried out by means of the server 30.

The arrows 1b in figure 1 show such an indirect exchange in which the user, to indicate that he wishes to access the resource for which access is protected by the base, transmits an identifying code of the base to the server.

In this case, the base 20 is, for example, identified by a specific unique number, provided to the server 30 by the user.

Said server 30 then manages the connection with the access base 20 concerned. The server thus transmits the access request to the base identified using the base identifying code provided by the terminal to the server. The access base 20 can thus be connected to the server 30 via any type of telecommunication network (for example by IP or X25 protocol).

The exchanges between the server and the terminal are carried out in particular via the cellular telephone network to which the user subscribes.

A particularly advantageous embodiment is thus that in which the server is controlled by the operator of the mobile telephone to which the user subscribes.

The user's identity code can be, in a non-limiting manner :
- the user's telephone number ;
- any other number specific to the user (such as a personal identification number PIN, for example) ;
- a file stored on the user terminal or on the smart card in the user's terminal (electronic certificate, for example).

In a second step, the access base 20 determines, on the basis of the user's non-biometric identity code which was transmitted in the first identification step, the corresponding access rights depending on the circumstances (time, place, etc.).

The arrow 2 in figure 1 shows the query by the base 20 of the access rights management database 21 for determining whether the user identified by the non-biometric identity code transmitted in the first step has the rights for access to the resource.

If the user does not have access rights, the user can be rejected by the base, and access to the resource is not authorized to said user.

If the user has access rights to the resource, the base 20 requires, in a third step, a request for biometric confirmation of the user's identity (biometric authentication request).

This purpose of this is to verify with the highest possible degree of certainty that the user who transmitted a valid identity code in the first step is indeed the user he claims to be.

This confirmation request can be sent :
- either directly to the mobile telephone terminal (cf. arrow 3a) ;
- or to the server which is then responsible for transmitting the request to the terminal (cf. arrows 3b).

The terminal 10 is thus called to invite the user to provide the biometric data on the acquisition module integrated into the terminal.

The invention thus concerns, according to this first embodiment, an operation in which a first identification step is used in order to call, in a second step, the mobile telephone terminal on which the user's biometric data is to be provided.

In a step shown by reference 4 in figures 1 and 2, the terminal 10 thus acquires the user's biometric data.

It is specified that the acquired biometric data can be processed in this step, which processing is required, for example, so that the comparison with one or more references can then be performed (the comparison function is thus distributed between the terminal and the server, as mentioned previously).

In the case of fingerprints, such processing can, for example, include the calculation of "minutiae".

A fourth step relates to the biometric authentication, i.e. the comparison between the user's biometric reference (or the biometric references of users in a group of users having the same access rights) and the biometric data acquired in the previous step on the terminal.

According to a first alternative to this first embodiment, the user's biometric reference (or references in the context of restricted identification in which a single terminal can be used by several users) is (are) stored on the terminal (or alternatively in the SIM card for user identification which is inserted in said terminal).

In the preliminary enrollment step in which the user registers for the service, said user is actually invited to "enter" biometric data on the telephone terminal, which data is used to calculate the reference. The calculation is performed on the terminal, or said data is transmitted to the server which then calculates the user's biometric reference. Said server then transmits said user reference to the terminal (preferably in encrypted form) for storage in said terminal (or in the SIM card).

As mentioned previously, the biometric comparison can be performed on the terminal itself. Even if this implementation is not entirely satisfactory in terms of security (a fraud being capable, for example, of replacing the biometric comparison function with an emulator), it is possible to implement specific means eliminating the possibility of such an emulation.

When the terminal supports the comparison function (in this case, it is equipped with a biometric comparison module), the acquired biometric data is compared with the user's biometric reference (or with a plurality of references in the context of restricted identification) stored on the terminal or in the SIM card and the result of the comparison is then transmitted to the server.

A solution enabling the aforementioned disadvantage to be avoided involves performing the comparison function not on the terminal 10, but on the server 30.

The comparison itself will thus be performed by the server, which is equipped with a biometric comparison module. This comparison requires not only the biometric data acquired and processed by the terminal, but also the user's biometric reference (or references in the context of restricted identification in which a single terminal can be used by several users).

The terminal thus transmits to the server, in step 5a (cf. figures 1 and 2) the acquired user's biometric data as well as the reference(s) stored on the terminal (or on the SIM card).

For complete security, it is necessary to ensure that the reference sent to the server by the terminal is correct, i.e. in particular, that it has not been corrupted by a fraud.

For this, the invention proposes that the exchanges between the server and the terminal can be encrypted.

In this way, at the time of enrollment, the server sends to the terminal the biometric reference in encrypted form, in particular with a secret key held by the server alone.

The same encrypted reference will then be sent from the terminal to the server each time a comparison is necessary.

The encryption with a secret key held by the server alone in fact makes it possible to ensure that false references cannot be developed by frauds.

According to a second alternative to this first embodiment, the server has biometric references of the different users and is equipped with a biometric comparison module.

In the context of this alternative, the terminal sends only the acquired biometric data so that the server can perform the comparison with the reference(s) stored therein.

The terminal thus transmits, in step 5b (cf. figures 1 and 2) only the acquired biometric data to the server.

In a sixth step 6, the server searches for a match between the acquired user's biometric data and the biometric reference(s) of the user(s) associated with the non-biometric identity code provided by the user in the identification step.

A comparison between said data and the reference(s) is thus performed by means of the biometric comparison module in the server 30.

The comparison is thus 1-to-1 (authentication) when the terminal is used by a single user, or when the terminal is capable of being used by different users having different access rights.

The comparison is 1-to-N (restricted identification) when the terminal is used by a restricted group f users having the same access rights (and therefore the same non-biometric identity code).

A seventh step 7 relates to the indication, to the access terminal, of the result of the search performed in the previous step, i.e. the result of the biometric authentication of the user.

A binary result (user authenticated/user not authenticated) is thus sent to the access terminal. The latter consequently authorizes or denies access by the user to the protected resource.

There are cases in which the acquired biometric data of the user is used to determine certain attributes of a user, such as age, for example. The information concerning these attributes can also be used to authorize or not authorize the user to access the resource, thus providing an additional level of security.

A second embodiment of the invention is described below, in which a step of biometric identification of the user is implemented after said user has transmitted, to the base, via the server, a request for access to the resource.

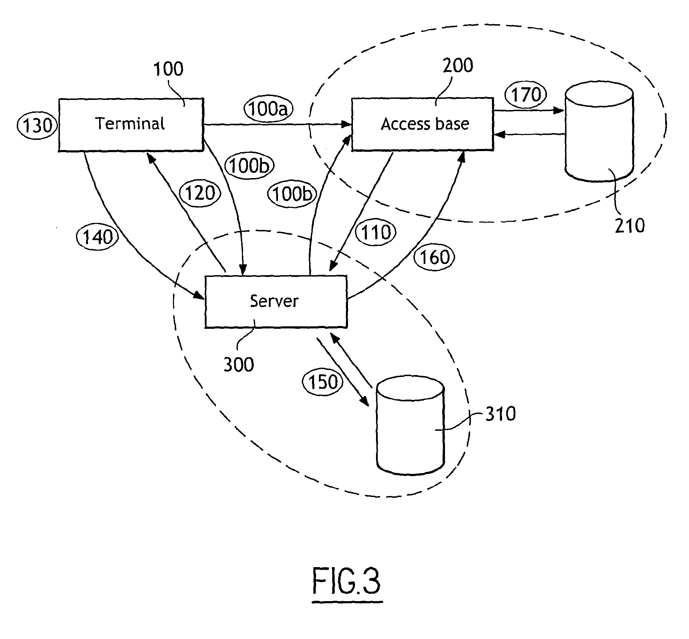

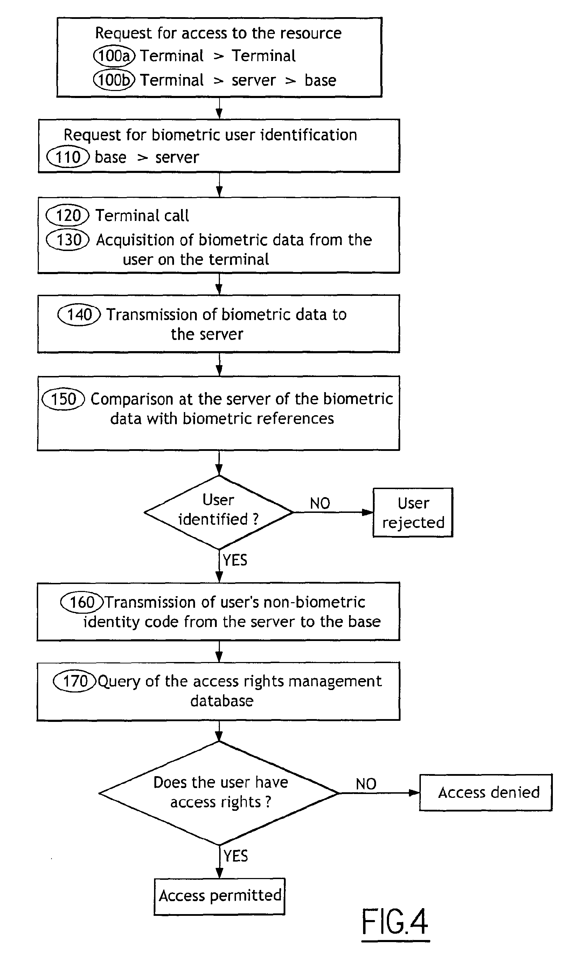

Figures 3 and 4 show this second embodiment of the invention for the case in which the comparison function is entirely or partially supported by the server.

In a manner similar to the first embodiment, the system according to the second embodiment includes, in reference to figure 3, a mobile telephone terminal 100 equipped with a biometric data acquisition module, an access base 200 having a database 210 for managing access rights, and a server 300 integrating a biometric module capable of searching for a match between a biometric data item and one or more references.

It should be understood that the various exchanges between the two terminals and the server are carried out in a manner similar to that previously described.

In a first step, the user sends, via a mobile telephone terminal 100, to the access base 200, a request for access to the protected resource.

The exchanges between terminal 100 and terminal 300 can be carried out directly in this identification step. The arrow 100a of figure 3 shows such a direct exchange.

The exchanges between terminal 100 and base 200 for the access request can preferably be carried out as in the context of the first embodiment, by means of the server 300. The arrows 100b of figure 1 show such an indirect exchange.

In a second step, the terminal 200 sends to the server 300 a request for biometric identification of the user having requested access to the resource in the first step.

The arrow 110 in figure 3 shows this request for biometric identification of the user.

In a third step (cf. reference 120), the terminal 100 is called by the server 300 to invite the user to provide biometric data on the terminal.

Thus, according to this second embodiment, the invention relates to an operation in which a first access request step is used to call, in a subsequent step, the mobile telephone terminal on which the user's biometric data is to be provided.

In a third step shown by reference 130 in figure 3, the terminal 100 thus acquires (and optionally processes) the user's biometric data. The biometric data is then either saved on the terminal if the comparison function is entirely supported by the latter, or transmitted in a fourth step to the server if the comparison function is entirely or partially supported by the server (transmission shown by arrow 140 in figure 3).

The following step (reference 150 in figure 3) relates to the biometric identification of the user, i.e. the search for a match between the biometric data of the user acquired on the terminal in the previous step and one of the biometric user references.

When the comparison itself must be performed by the server 300, the latter has all of the biometric references of the various users. A so-called reference database 310 indexing the biometric references of the various users, as well as the non-biometric identity codes associated with said users, is thus housed in the server.

The server 300 thus queries the reference database by performing a t-to-N comparison between said acquired biometric data and the references stored in said reference database 310.

If the user is found in the reference database 310, the server transmits, in a sixth step (arrow 160 in figure 2), to the access base, the non-biometric identity code corresponding to said user.

Alternatively, when the terminal supports the comparison function (in this case, it is equipped with a biometric comparison module), the acquired biometric data is compared with all of the biometric reference stored in the terminal or in the SIM card, and the result of the comparison is then transmitted from the terminal to the server. However, this alternative corresponds to a very specific use in which the users present themselves at the access terminal with the same single telephone terminal.

The access base then verifies (step 170) the access rights associated with said identity code so as to authorize or deny, depending on said access rights, access by said user to the protected resource.

The acquired biometric data of the user can also be used in the context of this second embodiment of the invention to determine certain attributes of a user, such as age, for example. The information on these attributes can be used to authorize or deny access by the user to said resource, thus providing an additional level of security.

Finally, the invention proposes the management of the biometric function by a body managing, in particular, the registration of users (in the enrollment phase, for the calculation of references) and having a server optionally equipped with a biometric module for comparison between biometric data of a user with one or more biometric references.

Separate access control systems can thus be connected to this management body, thereby enabling the biometric function of said access control to be centralized.

Therefore, the user has a single means (the mobile telephone terminal) for accessing resources protected by separate systems. Such a centralized management in particular protects the user from the inconveniences associated with multiple biometric control solutions for access that may be implemented.

Moreover, the invention relieves the entities developing access control systems from the requirements of biometric function management and development. Said entities can in fact rely on the service provided by said centralizing body, and avoid, in particular, the enrollment phase which can sometimes be very difficult in biometrics.

Since said server is connected to each of the user terminals, a particularly advantageous embodiment of the invention involves, as mentioned previously, the case of a server housed by a mobile telephone operator.

Indeed, the operator has, in particular, means for communicating with said terminals as well as means for containing databases associated with said users, which means are thus capable of being advantageously used by the server.

Furthermore, in such a context, it is possible to use the billing means of the operator to bill the user when the latter accesses a protected resource, in particular when said access has a fee.

## Claims

1. Method to control user access to a resource, wherein the access to said resource is protected by an access base (20, 200), the user has a mobile telephony terminal (10, 100) equipped with an acquisition module of at least one biometric user data, which method comprises an access request step (1a, 1b, 100a, 100b) during which the user indicates using its terminal that he wishes to have access to the resource, as well as an acquisition step (4, 130) for acquiring at least one biometric data from the user on the terminal,
said method being **characterized in that**:
- to indicate that he wishes to have access to the resource for which access is protected by the access base, the user transmits to a server (30, 300) an identifying code of the base,
- and **in that**, following the step of requesting access to the resource, it comprises the steps of:
- transmission by the server of the access request to the access base identified by said identifying code provided by the terminal to the server;
- call (3a, 3b, 120) of the terminal to invite the user to perform the acquisition of its biometric data on its terminal;
- a search (6, 150) by a biometric comparison module for correspondence between said user biometric data and one or more biometric user references;
- indication (7, 160) to the access base of the result of said search by said server (30, 300).

2. Method according to claim 1, **characterized in that**, during the resource access request step, the user also sends to the server a non-biometric user identifier, said non-biometric identifier being sent by the server to the access base with the access request.

3. Method according to claim 2, **characterized in that**, following the access request step, the access base checks (2) the access rights associated with said non-biometric identifier sent by the user, and if the user has access rights, said access base requests biometric confirmation of the user's identity.

4. Method according to claim 3, **characterized in that** the step of calling the terminal is carried out following said request by the access base for biometric confirmation of the user's identity.

5. Method according to claim 4, **characterized in that** the terminal is called directly (3a) by the access base.

6. Method according to claim 4, **characterized in that** the terminal is called indirectly (3b) by the access base, via the server.

7. Method according to any of claims 4 to 6, wherein said server is equipped with said biometric comparison module, **characterized in that** it comprises, once the acquisition of the biometric data has been completed by the user on its terminal, a transmission step (5a, 5b) of said biometric user data from the terminal to said server.

8. Method according to claim 7, **characterized in that**, during the transmission step (5a) of the biometric user data, said terminal also sends said server one (or more) biometric user reference(s) stored on the terminal or in the user's identification SIM card inserted in the terminal.

9. Method according to claim 8, **characterized in that** the search step (6) consists of comparing the biometric data sent from the terminal to the server with the biometric reference(s) also sent from the terminal to the server, so as to authenticate the user.

10. Method according to claim 7, **characterized in that** the search step (6) consists of comparing said biometric data sent (5b) from the terminal with one (or more) biometric reference(s) stored on the server and corresponding to the identifier provided by the user, so as to authenticate the user.

11. Method according to any of claims 4 to 6, wherein the terminal is equipped with said biometric comparison module, **characterized in that** the search step consists of comparing said biometric user data acquired on the terminal with one (or more) biometric user reference(s) stored on the terminal or in the user's identification SIM card inserted in the terminal, so as to authenticate the user.

12. Method according to claim 11, **characterized in that** it also comprises, following said search step, a transmission step (7) of the search result, from the terminal to the server.

13. Method according to claim 9, 10 or 12, **characterized in that** the indication step to the access terminal of the search result consists of informing the access terminal of the authenticity of the user requesting access or not.

14. Method according to claim 13, **characterized in that** the access terminal authorizes access to the resource to an authenticated user and denies access to a non-authenticated user.

15. Method according to claim 1, **characterized in that**, following the resource access request step, the access base (110) requests the server for biometric identification of the user requesting access.

16. Method according to claim 15, **characterized in that** the calling step (120) of the terminal is carried out by the server once the biometric identification request has been received from the access base by said server.

17. Method according to claim 16, wherein the server is equipped with said biometric comparison module, **characterized in that** it comprises, once the acquisition of the biometric data has been completed by the user on its terminal, a transmission step (140) of said biometric user data from the terminal to said server.

18. Method according to claim 17, **characterized in that** during the transmission step of the biometric user data, said terminal also sends said server a set of biometric user references stored on the terminal or in the user's identification SIM card inserted in the terminal.

19. Method according to claim 18, **characterized in that** the search step (150) consists of comparing the biometric data sent from the terminal to the server with the set of biometric references also sent from the terminal to the server, so as to identify the user once correspondence has been established between the biometric data and one of said references.

20. Method according to claim 17, **characterized in that** the search step (150) consists of comparing said biometric data sent (140) from the terminal with a set of biometric references stored on said server, so as to identify the user once correspondence has been established between the biometric data and one of said references.

21. Method according to claim 16, wherein the terminal is equipped with said biometric comparison module, **characterized in that** the search step consists of comparing said biometric user data acquired on the terminal with a set of biometric user references stored on the terminal.or in the user's identification SIM card inserted in the terminal, so as to identify the user once correspondence has been established between the biometric data and one of said references.

22. Method according to claim 21, **characterized in that** also comprises, following the search step, a transmission step of the search result, from the terminal to said server.

23. Method according to any of claims 19, 21 or 22, **characterized in that**, in the event of user identification, the indication step (160) to the access base of the search result comprises the transmission to the access base of the non-biometric identifier associated with the user.

24. Method according to claim 23, **characterized in that** it also comprises a step (170) during which the access base checks the access rights associated with the non-biometric identifier sent thereto during the indication step and authorizes the user to access said resource or not according to the result of said access right verification.

25. Method according to any of the above claims, **characterized in that** it comprises a preliminary enrolment step comprising the operations consisting of biometric user data acquisition on the terminal, calculation and storage of the biometric reference either via the terminal, or via the server, in which case the terminal is responsible for sending the biometric data to the server.

26. Protected resource access control system comprising a resource access base (20, 200), a mobile telephony terminal (10, 100) equipped with an acquisition module of at least one biometric user data, means such that the user can indicate, using its terminal, a resource access request, said system being **characterized in that** it comprises a server (30, 300) capable of communicating firstly with the terminal and secondly with the access base along with means such that:
- the user can send the server an identifier of the access base to which access is requested;
- the server can send said access request to the access terminal identified by said identifier;
- the access base can request for the terminal to be called to invite the user to perform the biometric data acquisition on said terminal;
- the terminal can:
- either send the server said biometric user data, said server being equipped with a biometric comparison module capable of comparing the biometric data with one or more biometric user references;
- or be itself equipped with a biometric comparison module such that it compares the biometric data with one or more biometric user references and sends the result of said comparison to said server;
- the server can indicate to the access base the result of the comparison between said biometric user data and one or more biometric user references.

27. System according to the above claim, **characterized in that** it comprises means to implement the method according to any of claims 1 to 25.

28. System according to any of the above two claims, **characterized in that** the server is hosted by a mobile telephony operator.

29. Protected resource access base (20, 200) to control user access to said resource, the user using a mobile telephony terminal (10, 100) equipped with an acquisition module of at least one biometric user data, said access base being **characterized in that** it comprises means capable:
- of receiving an access request from a server (30, 300) contacted by the terminal when the user wishes to access the resource;
- and, following the reception of said access request, of requesting:
- the user's terminal to be called so that said user performs its biometric data acquisition on the acquisition module integrated in said terminal;
- said server to indicate the result of a comparison made at the level of said server or said terminal between said biometric user data and one or more biometric references.

30. Access base (20) according to the above claim, **characterized in that** it comprises means for checking that the user has, on the basis of a non-biometric identifier supplied, via the server, by the user to said access base during the access request, access rights to the resource and to request for the terminal to be called if the result of said verification is positive, said comparison making it possible to authenticate the user biometrically.

31. Access base (200) according to the above claim, **characterized in that** it comprises means for requesting for the terminal to be called as soon as the user wishes to access the service, said comparison making it possible to identify the user biometrically, along with means to verify that the user has access rights to the resource, on the basis of a non-biometric identifier supplied by the server when said server indicates to the access terminal that the user was identified during said comparison.
